(19) **Europäisches Patentamt / European Patent Office / Office européen des brevets**

(11) **EP 3 641 405 A1**

(12) **EUROPEAN PATENT APPLICATION**

(43) Date of publication:
**22.04.2020 Bulletin 2020/17**

(21) Application number: **18201605.5**

(22) Date of filing: **19.10.2018**

(51) Int Cl.:
**H04W 48/12** (2009.01)    **H04W 48/16** (2009.01)
**H04W 48/20** (2009.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kanagawa 211-8588 (JP)**

(72) Inventors:
- JABER, Mona
  London WC1A 2JR (GB)
- BUCKNELL, Paul
  Peacehaven
  Sussex BN10 7AJ (GB)
- MULLER, Julien
  London SW11 6BE (GB)

(74) Representative: **Haseltine Lake Kempner LLP**
**Lincoln House, 5th Floor**
**300 High Holborn**
**London WC1V 7JH (GB)**

(54) **A METHOD IN A USER EQUIPMENT, UE, OF CELL SELECTION, A UE, AND A COMMUNICATIONS SYSTEM**

(57)    A method in a User Equipment, UE, of cell selection comprising: receiving system information from more than one cell, the system information from each cell including offset values, each offset value reflecting the capability of that cell with respect to a different service-based characteristic; weighting each received offset value according to the priority of the service-based characteristic for the UE; and ranking the cells for selection by the UE taking into account the weighted offsets.

FIG. 2

**Description**

**Field of the Invention**

The present invention relates generally to wireless communication methods and systems and to selection of a base station or cell by a terminal.

Particularly, but not exclusively, the present invention relates to a cell selection or re-selection method in a 3GPP LTE or 3GPP LTE-A ("4G") wireless communication environment.

**Background of the Invention**

Wireless communication systems are widely known in which terminals (also called user equipments or UEs, subscriber or mobile stations) communicate over a wireless interface (also referred to as an air interface) with base stations (BSs) within communication range of the terminals.

At a given carrier frequency the different geographical areas served by one or more base stations are generally referred to as cells. A base station may support one or more cells. Typically many base stations are provided in appropriate locations so as to form a network covering a wide geographical area more or less seamlessly with adjacent and/or overlapping cells. (In this specification, the terms "system" and "network" are used synonymously). For each cell, a base station divides the available bandwidth, i.e. frequency and time resources, into individual resource allocations for the user equipments served by the cell. In this way, a signal transmitted in a cell and scheduled by the base station has a specific location in the frequency and time domains. The terminals are generally mobile and therefore may move among the cells, prompting a need for handover of the connection of the terminal to the network as the terminal moves between adjacent cells. A terminal may be in range of (i.e. able to detect signals from and/or communicate with) several cells at the same time, but in the simplest case it communicates with one "serving" cell. A terminal is normally only able to access a single network provided by a single operator. However networks/operators may cooperate.

A terminal may be "idle" or "connected". When a terminal is idle, it is switched on, but not in use for a call or to access other mobile services. In this case it may be attached to (or "camped on" to) a cell, referred to as a serving cell, or it may be not be attached to a cell, in which case it may be in the process of selecting or reselecting a cell.

**4G Architecture**

One type of cellular wireless network is based upon the set of standards referred to as Long-Term Evolution (LTE) or 4G. In this network topology, each terminal, called a UE in LTE, connects wirelessly over an air interface (labelled Uu) to a base station in the form of an enhanced node-B or eNB. The air interface uses the Radio Resource Control RRC protocol. The UE is in RRC IDLE state until an RRC connection is established, when it becomes RRC CONNECTED.

It should be noted that various types of eNB are possible. An eNB may support one or more cells at different carrier frequencies, each cell having differing transmit powers and different antenna configurations, and therefore providing coverage areas (cells) of differing sizes, such as macro cells and small cells providing additional coverage. These small cells are smaller than the macro cells and include femtocells (often used as Home Node Bs, HNBs), picocells and microcells. Multiple eNBs deployed in a given geographical area constitute a wireless network called the E-UTRAN. Usually there is a basic grid of macrocells, overlaid by small cells as appropriate to boost coverage.

Many features may influence the overall performance of a service, Quality of Service, QoS. The term "context" is used herein to indicate surrounding factors which affect the UE performance when used for calls or accessing other services.

Beyond the signal strength and quality, factors such as the type of service required, device and subscription constraints, frequency or RAT priority at the UE end and power, throughput, latency and security of the cell/network may give the context surrounding a UE connection.

For instance 3GPP TS 36.413 "Evolved Universal Terrestrial Radio Access Network (E-UTRAN); S1 Application Protocol (S1AP)" (Reference 6 herein) states as follows:

8.3.1.1 General

The purpose of the Initial Context Setup procedure is to establish the necessary overall initial UE Context including E-RAB context, the Security Key, Handover Restriction List, UE Radio capability and UE Security Capabilities etc. The procedure uses UE-associated signalling.

In next generation networks, context-aware connectivity of the terminal to a cell is becoming increasingly important in order to comply with the expected diverse QoS requirements whilst maximising the utilisation of the network.

Current 3GPP compliant methods to implement context-aware connectivity require two phases. The first is a network-centric connectivity that handles all terminals agnostically (without taking context into account), often followed by a second phase that hands over the network-centric connectivity to another network entity that configures the context-aware QoS.

Therefore it is desirable to provide a method that takes context into account when addressing UE connections to cells.

According to an embodiment of a first aspect of the invention, there is provided a method in a User Equipment, UE, of cell selection comprising: receiving system information from more than one cell, the system information from each cell including offset values, each offset value reflecting the capability of that cell with respect to a different service-based characteristic; weighting each received offset value according to the priority of the service-based characteristic for the UE; and ranking the cells (for selection by the UE) taking into account the weighted offsets.

Invention embodiments allow a context-aware connectivity phase in cell selection (including cell re-selection), and hence avoid unnecessary device battery consumption and network signalling load. Another key benefit is the management of idle mode UEs. The network may have more control to direct UEs requiring certain services to perform initial access on the most appropriate network cell(s).

The UE may sum the weighted offsets for each cell to provide a ranking based on all the service-based characteristics. Alternatively, only a predetermined number of the higher values may be taken into account.

The weighted offsets may be taken into account in any way, for example by subtraction from a measurement of signal level received from the cell. Alternatively, they may be added.

The ranking $R_s$ for the serving cell that the UE is camped on and $R_n$ for neighbouring cells may be defined in the UE by:

$$R_s = Q_{meas,s} + Q_{hyst} - \sum_{c=1}^{C} \omega_c \times Q_{offset_c} - Q_{offset_{temp}} + Q_{offset_{SCPTM}}$$

$$R_n = Q_{meas,n} - \sum_{c=1}^{C} \omega_c \times Q_{offset_c} - Q_{offset_{temp}} + Q_{offset_{SCPTM}}$$

where $Q_{meas}$ is the RSRP measurement quantity used in cell reselections, $Q_{hyst}$ specifies the hysteresis value for ranking criteria, $\omega_c$ is the weight for service characteristic c applied in the UE, $Q_{offset_c}$ is the offset value for service characteristic $C$, $Q_{offset_{temp}}$ is any offset temporarily applied to a cell, and $Q_{offset_{SCPTM}}$ is any offset temporarily applied to a Single Cell Point to Multipoint, SC-PTM, frequency.

Any suitable service-based characteristics may be used. They may include one or more of: transmission power, end-to-end throughput availability, end-to-end latency, security, and geographical cell size.

The UE weightings may be based, for example, on one or more of: anticipated use of the UE, constraints of the UE, and constraints of a user's subscription for the UE services.

The UE weightings may be stored dynamically in the UE. In one example, they may be between 0 and 1. The offset values may have a range of 9 possible values to avoid signalling overhead,

The method may be used in a cell reselection process, such as the cell reselection evaluation process in 3GPP LTE. In this case, when a cell is ranked as the best cell, the UE may perform reselection to that cell.

In an LTE scenario, the aggregate effect of the weighted offset may remain within the range of 3GPP LTE offset effect of -24dB to 22dB.

According to a further aspect there is provided a method of cell reselection in a system with User Equipments, UEs, that do not support multiple offset values for different service-based characteristics, and User Equipments, UEs, that do support multiple offset values for different service-based characteristics wherein: when one or both of :

a UE is camped on a cell that does not support multiple offset values for different service-based characteristics, and

a UE does not support multiple offset values for different service-based characteristics, then the ranking $R_s$ for the serving cell and $R_n$ for neighbouring cells is defined in that UE by

$$R_s = Q_{meas,s} + Q_{hyst} - Q_{offset_{temp}} + Q_{offset_{SCPTM}}$$

$$R_n = Q_{meas,n} - Q_{offset_{temp}} + Q_{offset_{SCPTM}}$$

where $Q_{meas}$ is the RSRP measurement quantity used in cell reselections, $Q_{hyst}$ specifies the hysteresis value for ranking criteria, $Q_{offset_{temp}}$ is any offset temporarily applied to a cell, and $Q_{offset_{SCPTM}}$ is any offset temporarily applied to a Single Cell Point to Multipoint, SC-PTM, frequency.

When a UE is camped on a cell that supports multiple offset values for different service-based characteristics, and the UE supports multiple offset values for different service-based characteristics, then the ranking for the serving cell and for neighbouring cells may be defined in that UE by the method as set out above.

The variety in methods for ranking allows for backwards compatibility. If the UE and the cell that the UE is camped on does support multiple offsets, but other cells within range do not support multiple offsets there would be no preference given to either group, but the normal criteria would apply to cells which either support or do not support multiple offsets.

According to a further aspect there is provided a program which may be carried on a non-transitory storage medium, and which when loaded onto the controller of a User Equipment, UE, configures the UE to carry out the method steps according to any of the preceding method definitions or any combination thereof.

According to a still further aspect there is provided a User Equipment, UE, comprising: a controller to carry out cell selection; and a receiver to receive information from more than one cell, wherein the receiver is to receive system information from more than one cell, the system information from each cell including offset values, each offset value reflecting the capability of that cell with respect to a different service-based characteristic; the controller is to weight each received offset value according to the priority of the service-based characteristic for the UE and to rank the cells to take into account the weighted offsets.

According to a yet further aspect there is provided a communications system comprising: more than one cell to communicate with User Equipments, UEs, wherein one or more of the UEs is a UE as defined above.

In such a communications system, one or more of the cells (which supports multiple offset values for different service-based characteristics) may comprise storage to store the cell's capabilities with respect to service characteristics in the form of offset values and a transmitter to transmit system information including the offset values to the UEs.

The invention is described in terms of particular embodiments. Other embodiments are within the scope of the following claims. For example, the steps of the invention may be performed in a different order and still achieve desirable results.

Preferred features of the present invention will now be described, purely by way of example, with references to the accompanying drawings, in which:-

Figure 1 is a diagram of RRC_IDLE cell selection and reselection;

Figure 2 is an overview flowchart of a method according to an invention embodiment.

Figure 3 is a block diagram illustrating an example of a terminal to which the present invention may be applied;

Figure 4 is an overview diagram of a communication system; and

Figure 5 is a flowchart of cell reselection evaluation process.

**Cell selection/reselection in idle mode** - **LTE**

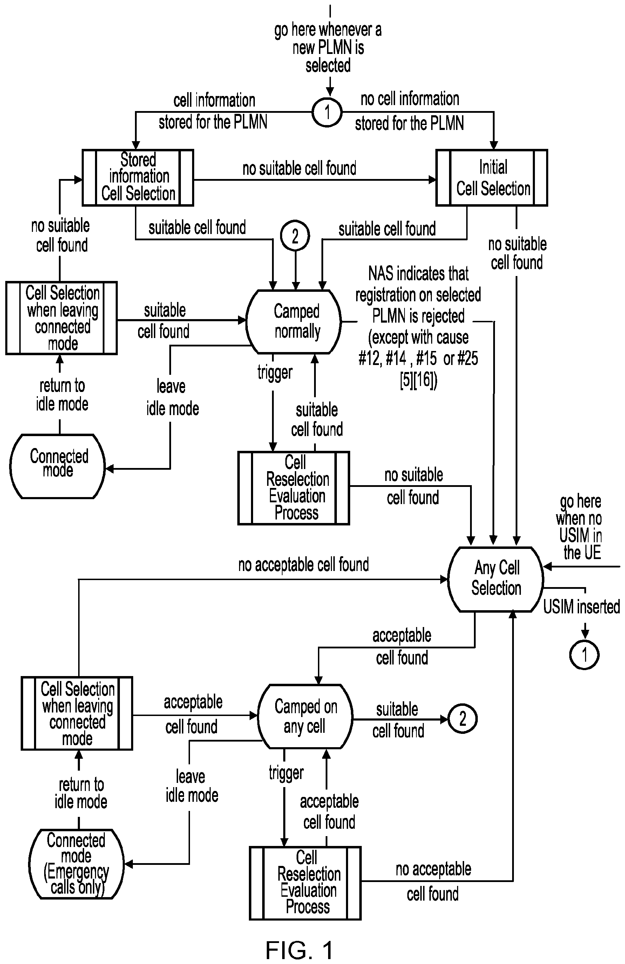

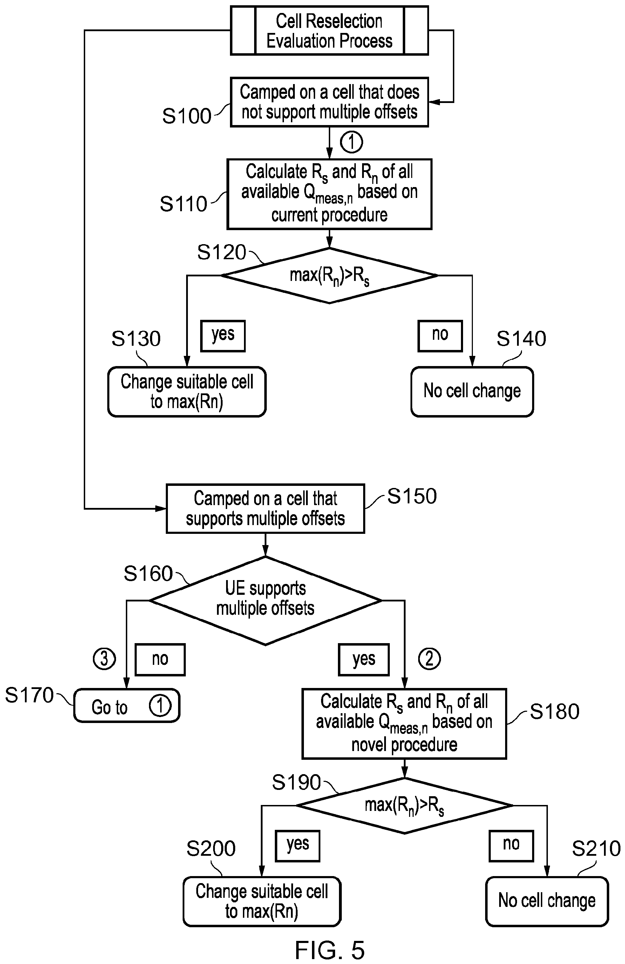

Cell selection and reselection procedures in RRC-Idle-mode are defined in as part of the UE procedures in Reference 1: 3GPP TS 36.304: "User Equipment (UE) procedures in idle mode" which is incorporated herein by reference. The flow chart that represents these procedures for other than NB-IoT (Narrow Band Internet of Things) is reproduced in Figure 1 for clarity, from Figure 5.2.2-1 of Reference 1.

Whenever a new PLMN selection is performed, it causes an exit to number 1, shown at the top of the flowchart. The UE then uses one of the following two cell selection procedures:

a) Initial Cell Selection

This procedure requires no prior knowledge of which RF channels are E-UTRA or NB-IoT carriers. The UE shall scan all RF channels in the E-UTRA bands according to its capabilities to find a suitable cell. On each carrier frequency, the UE need only search for the strongest cell. Once a suitable cell is found this cell shall be selected.

b) Stored Information Cell Selection

This procedure requires stored information of carrier frequencies and optionally also information on cell parameters, from previously received measurement control information elements or from previously detected cells. Once the UE has found a suitable cell the UE shall select it. If no suitable cell is found the Initial Cell Selection procedure shall be started.

NOTE 1: Priorities between different frequencies or RATs provided to the UE by system information or dedicated signalling are not used in the cell selection process.

NOTE 2: If BL UE, UE in enhanced coverage or NB-IoT UE has been provisioned with EARFCN, the UE may use this information during Initial Cell Selection and Stored Information Cell Selection to find a suitable cell.

Invention embodiments concern the processes in Figure 1 that are used for ranking and evaluating the best candidate cell for reselection (Cell Reselection Evaluation Process). No other change to the flow chart of Figure 1 is necessary to implement the invention embodiments.

In the arrangement of Figure 1, the UE selects a suitable cell based on idle mode measurements and cell selection criteria and camps on to the first suitable cell that it finds. However, when camped on a cell, the UE regularly searches for a better cell according to the cell reselection criteria. If a better cell is found, that cell is selected. The change of cell may imply a change of Radio Access Technology, RAT.

In other arrangements, cell selection may be more discriminating and invention embodiments may additionally or alternatively be implemented at the (initial) cell selection stage.

The change to Figure 1 to incorporate context-awareness in cell reselection involves the conditions that qualify a candidate cell as a "suitable cell" within the Cell Reselection Evaluation Process. A high-level description of the current conditions can be found in chapter 5.2.3.2 of Reference 1 for cell selection as set out below:

The cell selection criterion S in normal coverage is fulfilled when:

$$\text{Srxlev} > 0 \ \ \text{AND} \ \ \text{Squal} > 0$$

where:

$$\text{Srxlev} = Q_{rxlevmeas} - (Q_{rxlevmin} + Q_{rxlevminoffset}) - \text{Pcompensation} - \text{Qoffset}_{temp}$$

$$\text{Squal} = Q_{qualmeas} - (Q_{qualmin} + Q_{qualminoffset}) - \text{Qoffset}_{temp}$$

where:

| | |
|---|---|
| Srxlev | Cell selection RX level value (dB) |
| Squal | Cell selection quality value (dB) |
| Qoffset$_{temp}$ | Offset temporarily applied to a cell as specified in [3] (dB) |
| Q$_{rxlevmeas}$ | Measured cell RX level value (RSRP) |
| Q$_{qualmeas}$ | Measured cell quality value (RSRQ) |
| Q$_{rxlevmin}$ | Minimum required RX level in the cell (dBm) |
| Q$_{qualmin}$ | Minimum required quality level in the cell (dB) |

(continued)

| $Q_{rxlevminoffset}$ | Offset to the signalled $Q_{rxlevmin}$ taken into account in the Srxlev evaluation as a result of a periodic search for a higher priority PLMN while camped normally in a VPLMN [5] |
|---|---|
| $Q_{qualminoffset}$ | Offset to the signalled $Q_{qualmin}$ taken into account in the Squal evaluation as a result of a periodic search for a higher priority PLMN while camped normally in a VPLMN [5] |
| Pcompensation | If the UE supports the *additionalPmax* in the *NS-PmaxList*, if present, in SIB1, SIB3 and SIB5: $max(P_{EMAX1} - P_{PowerClass}, 0) - (min(P_{EMAX2}, P_{PowerClass}) - min(P_{EMAX1}, P_{PowerClass}))$ (dB); else: if $P_{PowerClass}$ is 14 dBm: $max(P_{EMAX1} - (P_{PowerClass} - Poffset), 0)$ (dB); else: $max(P_{EMAX1} - P_{PowerClass}, 0)$ (dB) |
| $P_{EMAX1}$, $P_{EMAX2}$ | Maximum TX power level an UE may use when transmitting on the uplink in the cell (dBm) defined as $P_{EMAX}$ in TS 36.101 [33]. $P_{EMAX1}$ and $P_{EMAX2}$ are obtained from the *p-Max* and the *NS-PmaxList* respectively in SIB1, SIB3 and SIB5 as specified in TS 36.331 [3]. |
| $P_{PowerClass}$ | Maximum RF output power of the UE (dBm) according to the UE power class as defined in TS 36.101 [33] |

The signalled values $Q_{rxlevminoffset}$ and $Q_{qualminoffset}$ are only applied when a cell is evaluated for cell selection as a result of a periodic search for a higher priority PLMN while camped normally in a VPLMN [5]. During this periodic search for higher priority PLMN the UE may check the S criteria of a cell using parameter values stored from a different cell of this higher priority PLMN.

The notation [3] in the excerpt above and further excerpt below signifies 3GPP TS 36:331: "Radio Resource Control (RRC); Protocol specification" (Reference 4 herein). The notation [5] in the excerpt above signifies 3GPP TS 23.122: "NAS functions related to Mobile Station (MS) in idle mode" (Reference 2 herein). The notation [33] in the excerpt above signifies 3GPP TS 36.101: "User Equipment (UE) radio transmission and reception" (Reference 3 herein). All 3 References are incorporated herein by reference.

The following high-level description can be found in chapter 5.2.4.2 of Reference 1 for cell reselection:

When evaluating Srxlev and Squal of non-serving cells for reselection purposes, the UE shall use parameters provided by the serving cell.

Following rules are used by the UE to limit needed measurements:

- If the serving cell fulfils Srxlev > $S_{IntraSearchP}$ and Squal > $S_{IntraSearchQ}$, the UE may choose not to perform intra-frequency measurements.
- Otherwise, the UE shall perform intra-frequency measurements.
- The UE shall apply the following rules for E-UTRAN inter-frequencies and inter-RAT frequencies which are indicated in system information and for which the UE has priority provided as defined in 5.2.4.1:

    - For an E-UTRAN inter-frequency or inter-RAT frequency with a reselection priority higher than the reselection priority of the current E-UTRA frequency the UE shall perform measurements of higher priority E-UTRAN inter-frequency or inter-RAT frequencies according to [10].
    - For an E-UTRAN inter-frequency with an equal or lower reselection priority than the reselection priority of the current E-UTRA frequency and for inter-RAT frequency with lower reselection priority than the reselection priority of the current E-UTRAN frequency:

        - If the serving cell fulfils Srxlev > $S_{nonIntraSearchP}$ and Squal > $S_{nonIntraSearchQ}$, the UE may choose not to perform measurements of E-UTRAN inter-frequencies or inter-RAT frequency cells of equal or lower priority unless the UE is triggered to measure an E-UTRAN inter-frequency which is configured with *redistribution-InterFreqInfo.*
        - Otherwise, the UE shall perform measurements of E-UTRAN inter-frequencies or inter-RAT frequency cells of equal or lower priority according to [10].

The notation [10] in the excerpt above signifies Reference 5 in this document (3GPP TS 36.133: "Requirements for Support of Radio Resource Management").

Also, the following passage in 5.2.4.6 refers to cell ranking:

5.2.4.6 Intra-frequency and equal priority inter-frequency Cell Reselection criteria

The cell-ranking criterion $R_s$ for serving cell and $R_n$ for neighbouring cells is defined by:

$$R_s = Q_{meas,s} + Q_{Hyst} - Qoffset_{temp} + Qoffset_{SCPTM}$$

$$R_n = Q_{meas,n} - Qoffset - Qoffset_{temp} + Qoffset_{SCPTM}$$

where:

| $Q_{meas}$ | RSRP measurement quantity used in cell reselections. |
|---|---|
| Qoffset | For intra-frequency: Equals to Qoffset$_{s,n}$, if Qoffset$_{s,n}$ is valid, otherwise this equals to zero.<br>For inter-frequency:<br>Except for NB-IoT, equals to Qoffset$_{s,n}$ plus Qoffset$_{frequency}$, if Qoffset$_{s,n}$ is valid, otherwise this equals to Qoffset$_{frequency}$.<br>For NB-IoT equals to QoffsetDedicated$_{frequency}$ for any frequency other than the frequency of the dedicated frequency offset, if QoffsetDedicated$_{frequency}$ is valid, otherwise this equals to Qoffset$_{frequency}$ (if QoffsetDedicated$_{frequency}$ is valid Qoffset$_{frequency}$ is not used). |
| Qoffset$_{temp}$ | Offset temporarily applied to a cell as specified in [3] |
| Qoffset$_{SCPTM}$ | Offset temporarily applied to an SC-PTM frequency as specified below. The offset is applied to all cells on the SC-PTM frequency. If Qoffset$_{SCPTM}$ is valid, Qoffset for inter-frequency neighbour cells is not used. |

The notation [3] above signifies Reference 4 in this document (3GPP TS 36:331: "Radio Resource Control (RRC); Protocol specification").

$Q_{hyst}$ is defined elsewhere and specifies a hysteresis value for ranking criteria (to avoid excessive swapping between cells when there are similar conditions).

In addition, the reselection measurement may take into account the mobility state of the UE where three states are distinguished: a Normal-mobility state, a Medium-mobility state, and a High-mobility. The mobility states are applicable if the parameters (TCRmax, NCR_H, NCR_M and TCRmaxHyst) are sent in the system information broadcast of the serving cell. A UE is in high mobility state if the number of cell reselections during time period TCRmax exceeds NCR_H, else it is in medium mobility state if the number of cell reselections during time period TCRmax exceeds NCR_M, and else, it is in normal mobility state. In mobility states other than normal, the Speed dependent ScalingFactorfor $Q_{hyst}$ is applicable to the reselection criteria.

In the current cell selection/reselection 3GPP specifications, the decision criteria is UE context-agnostic (and based on the "Best Cell" principle, where the UE is allowed to camp on the best Cell in terms of its own signal strength measurements). There are procedures in place to distinguish the speed of mobility of UEs to avoid frequent re-selections, hence, unnecessary usage of the UE battery (see Reference 1). There have also been recent proposals by various members of 3GPP to allow for service-based cell reselection.

Service-based camping has a long history of 3GPP discussions; if cells are differentiated in what services they offer, it makes sense that a UE would want to camp on the cell that offers a service in which the UE has an interest. However, the inventors have come to the realisation that, in view of the increasing number of services in future networks (e.g., Multimedia Broadcast Multicast Services MBMS, Closed Subscriber Groups CSGs, Vehicle to Everything V2X, Ultra Reliable Low Latency Communications URLLC, Mission-Critical Push-To-Talk MCPTT, Mission Critical Video MCVideo, Mission Critical MCData, IoT, etc.), it may not be practical to signal service specific capabilities to the UE in idle mode. Current procedures tend to adopt the "Best Cell" principle as an initial step which is followed by a readjustment step (which may include access class barring), as required. Such a solution generally consumes more UE power (as more network to UE signalling is required), and increases the latency of establishing services to the UE, and increases the network load with signalling information incurred by readjustment procedures.

**General Invention Embodiments**

With the advent of a broad range of UE devices and services, it is beneficial to enable more UE-centric context-aware cell reselection methods. Instead of approaching the problem through an enumerated list of all possible services, invention embodiments identify a common list of key characteristic requirements that describe (all) services. Moreover, in order to still allow the UEs a role in selecting their context-aware best cell, a UE-specific weighting may be dynamically defined (in the UE) with respect to each of these key characteristics. These weightings (or priorities) are not signalled to the network but are used by the UE to enable a context-aware cell reselection. This mechanism has the benefit of the network being able to guide the UE to reselect the most appropriate cell for a UE requiring a specific service to camp on, whilst ensuring that the network load is carefully managed. This benefit is possible without "heavy" signalling in which the cell would have to broadcast the complete list of supported services of all cells in the neighbour list, or all the UEs would have to signal their quality requirements to their serving cell.

Another key benefit of this method is that it allows for the definition of new services without the need for changing the configuration. For instance a cell with a high setting of the special latency offset, supports all services such as URLCC, MCData, and MCPTT. Other new services that may defined in future releases that require ultra-low latency, would by default be supported by the cell, without the need to changing the configuration of SIB3 or SIB4. This is because invention embodiments concentrate on information relating to service-based characteristics rather than specific applications.

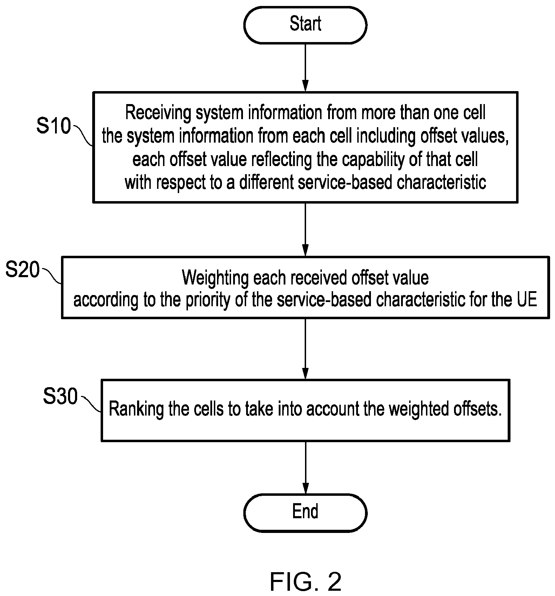

Figure 2 is an overview flowchart of a method according to an invention embodiment.

In step S10 of a method in a User Equipment, UE, of cell selection the UE receives system information from more than one cell, the system information from each cell including offset values, each offset value reflecting the capability of that cell with respect to a different service-based characteristic. This system information may be sent, for example, as part of the System Information Broadcasts, SIBs in LTE. The values may range between positive and negative. A lower (or more negative) value may indicating a lower capability, or a higher capability.

In step S20, the UE weights each received offset value according to the priority of the service-based characteristic for the U E. For example, if a service based characteristic is of little interest to the UE or an application that it is running, then a lower or zero priority may be used. The priority may vary from 0 to 1 (with no negative values). The weighting may be by multiplying the offset by the priority.

In step S30, the UE ranks the cells taking into account the weighted offsets. Usually the offsets will be taken into account in that they are subtracted from a positive indicator of cell suitability, such as signal level or quality or some combination of both. If the offsets are negative (as in the following example), a higher level gives a better score and thus a higher ranking.

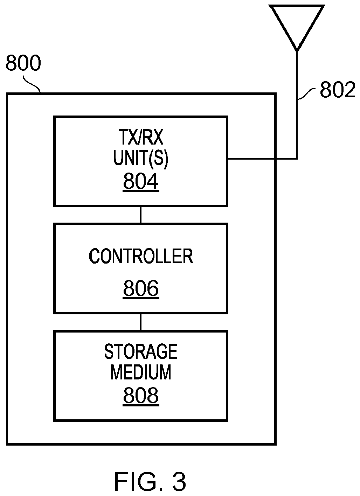

Figure 3 is a block diagram illustrating an example of a terminal 800 to which the present invention may be applied. The elements specific to the invention embodiments are the controller 806 and the receiver 804. The receiver is shown here as transmitter/receiver unit 804 and receives system information from more than one cell, the system information from each cell including offset values, each offset value reflecting the capability of that cell with respect to a different service-based characteristic. The controller 806 carries out cell selection by weighting each received offset value according to the priority of the service-based characteristic for the UE and ranking the cells taking into account the weighted offsets.

The terminal may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The terminal includes at least one transmitter/receiver unit 804 (each providing a receiver as mentioned above) connected to at least one antenna 802 and a controller 806 having access to memory in the form of a storage medium 808. The controller 806 may be, for example, a microprocessor, digital signal processor (DSP), application-specific integrated circuit (ASIC), field-programmable gate array (FPGA), or other logic circuitry programmed or otherwise configured to perform the various functions described above, including detecting PSS/SSS/PBCH for the purposes of cell search and synchronization. For example, the various functions described above may be embodied in the form of a computer program stored in the storage medium 808 and executed by the controller 806. The transmission/reception unit 804 is arranged, under control of the controller 806, to receive signals from cells including offset values as discussed previously. The storage medium 808 stores the offset values so obtained.

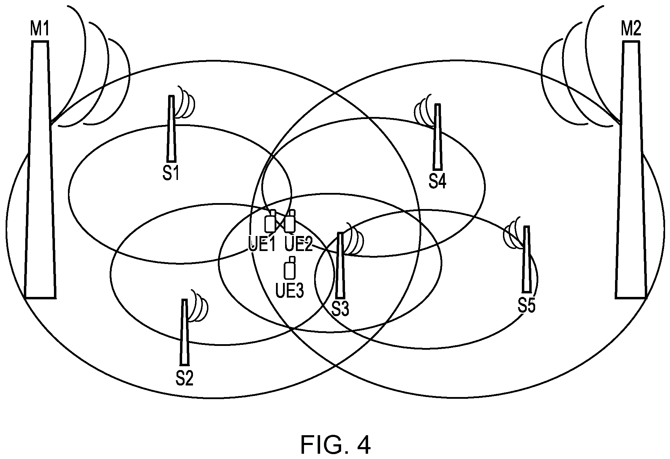

Figure 4 is an overview diagram of a communication system. Macro base stations M1 and M2 and small base stations S1, S2, S3, S4 and S5 provide cellular coverage in the form of macro cells and small cells for terminals UE1 and UE2. In invention embodiments, at least one of the terminals and at least one of the base stations (and therefore the cells) support multiple offset values for different service based characteristics.

**Specific Invention Embodiments**

Embodiments may be split into 3 parts described below:

Part 1. Modification of (LTE) system information to signal a list of multiple offsets for each cell in the neighbouring list, where each offset value reflects the cell's capabilities with respect to an identified service-based characteristic.

Part 2. Allow a UE-centric definition of a list of weights, where each weight reflects the priority perceived by this UE with respect to a given service-based characteristic.

Part 3. Modify or create the UE-based cell ranking to take into account the list of offsets signalled by the network and the list of weights defined by the UE. Embodiments may ensure that the aggregate effect of all special offsets and weights remains within the current range (-24dB to 22dB).

**Part 1** Embodiments require a modification in System Information Broadcast SIB types 3 and 4, as shown below. SIB-3 is amended solely by addition of the Special Offset Range of C offsets (Qoffset1, Qoffset2,..., QoffsetC where, QSpecialOffsetRange::=ENUMERATED {dB-4 dB-3, dB-2, dB-1, dB0, dB1, dB2, dB3, dB4}.

The amendment to SIB-4 is deletion of the single $Q_{offset}$ and replacement with the Special offset Range as for SIB-3.

LTE SIB-3

| Information Elements | | |
| --- | --- | --- |
| Cell Reselection Common Information | Qhyst | |
| | Mobility State Parameters | Tevaluation |
| | | T Hyst Normal |
| | | N Cell Change Medium |
| | | N Cell Change High |
| | Qhyst Scaling Factors | SF Medium |
| | | SF High |
| $Q_{offset1}$, $Q_{offset1}$,.... $Q_{offsetC}$ of types $Q_{SpecialOffsetRange}$<br><br>where, | | |
| Cell Reselection Serving Frequency Information | Snon-intrasearch | |
| | Thresh Serving Low | |
| | Cell Reselection Priority | |
| Intra Frequency Cell Reselection Information | Qrxlevmin | |
| | Pmax | |
| | Sintrasearch | |
| | Allowed Measurement Bandwidth | |
| | Presence of Antenna Port 1 | |
| | Neighbour Cell Configuration | |
| | Treselection EUTRA | |
| | Treselection EUTRA Scaling Factors | SF Medium |
| | | SF High |

| Information Elements | | |
|---|---|---|
| Intra-Frequency Neighbour Cell List (1 to 16 instances) | Intra-Frequency Neighbour Cell Information | Physical Cell Identity |
| | | $Q_{offset}$ |
| Intra-Frequency Black Cell List (1 to 16 instances) | Physical Cell Identity Range | Start |
| | | Range |
| CSG Physical Cell Identity Range | Physical Cell Identity Range | Start |
| | | Range |

LTE SIB-4

$Q_{offset1}, Q_{offset2}, \ldots, Q_{offsetC}$ of types $Q_{SpecialOffsetRange}$

**Part 2** New UEs compute a context-aware list of weights $\{\omega_1, \omega_2, \ldots, \omega_c\}$ based on the device capabilities, predicted application to take priority next time the UE becomes active, and, the application-specific requirements.

Nonetheless, to maintain backward compatibility, it is possible to keep the current offset parameters as they are to accommodate UEs that do not support his feature. By limiting the maximum number of special offsets to $C = 6$ and each special $Q_{offset}$ to a low range of values, embodiments maintain the aggregate effect of all special offsets within the current range (-24dB to 22dB). The idea is that a UE (defined by the device, the subscription, and the application) determines the following:

(a) The application that is likely to be used by the user next time he/she is active
(b) The constraints of the device (capabilities, battery level etc.)
(c) The subscription constraint (prepaid, post-paid, data package limitation etc.)

According to (a), (b), and (c), the UE may determine the weights that represent the UE's current prioritisation of various characteristics (e.g., throughput, latency, security, etc.). The UE does not need to signal this information to the network, because the UE alone performs the ranking. The network does not keep track of each UE's preferences in idle mode and hence, has no role in defining these weights. The coherence and stability of the network is ensured by restricting the aggregate effect of all special offsets to remain within the current range (-24dB to 22dB).

**Part 3-** Consequently, in embodiments, reselection ranking (i.e., qualifying for a "suitable cell") presented in Section 1.1, as described in 3GPP TS 36.304 (Reference 1), is modified to the following, if the UE is capable of context-aware weight computation:

$$R_s = Q_{meas,s} + Q_{hyst} - \sum_{c=1}^{C} \omega_c \times Q_{offset_c} - Q_{offset_{temp}} + Q_{offset_{SCPTM}}$$

$$R_n = Q_{meas,n} - \sum_{c=1}^{C} \omega_c \times Q_{offset_c} - Q_{offset_{temp}} + Q_{offset_{SCPTM}}$$

where $Q_{meas}$ is the RSRP measurement quantity used in cell reselections, $Q_{hyst}$ specifies the hysteresis value for ranking criteria, $\omega_c$ is the weight for service characteristic $c$ applied in the UE, $Q_{offset_c}$ is the offset value for service characteristic $c$, $Q_{offset_{temp}}$ is any offset temporarily applied to a cell, (and $Q_{offset_{SCPTM}}$ is any offset temporarily applied to a Single Cell Point to Multipoint, SC-PTM, frequency).

Otherwise, the UE may perform the ranking as currently defined in Reference 1. Accordingly, the change in the cell reselection process is depicted in the flowchart in Figure 5. If the current serving cell supports the multiple offsets in the SIBs 3 and 4 above and the UE that is camped on this cell also supports reading and interpreting this information, then the new reselection criteria is enforced as in (2) in Figure 5. If the serving cell does not support the new feature, then all UEs (even those that support the new feature) will perform the cell reselection ranking in the currently standardised way. Similarly, if the serving cell supports the new feature but the UE that is camped on it does not, as in (3) in Figure 5, then the UE will perform the standardised ranking as in (1).

In more detail, the flowchart starts at S100 with the UE camped on a cell that does not support the multiple offsets or at S150 with the UE camped on a cell that does support the multiple offsets. Looking first at S100, calculation of $R_s$ and $R_n$ in S110 is based on available measurement of signal level from each cell, without multiple offsets (previous method). If there are one or more neighbouring cells with a better $R_n$ than $R_s$, in S120, then the suitable cell is the one with maximum $R_n$ in S130. If not, there is no cell change (S140).

Turning now to S150 with the UE camped on a cell that does support the multiple offsets, if the UE does not support multiple offsets in S160, then the process goes to (1) in S170. On the other hand, if the UE (as well as the cell) does support multiple offsets in S160, then in S180, the calculation of $R_s$ and $R_n$ in S110 is based on available measurement of signal level from each cell, with multiple offsets (new method). If, taking the multiple offsets into consideration, there are one or more neighbouring cells with a better $R_n$ than $R_s$ in S190, then the suitable cell is the one with maximum $R_n$ in S200. If not, there is no cell change (S210).

## Worked Example

The following scenario is described for the purpose of clarifying the interworking between weights assigned by UEs and special offsets signalled by the eNBs. This example is purely illustrative and does not limit the scope of the invention, but is included to demonstrate the need for and envisaged usage of the invention embodiments as described in the previous sections.

To this end, the scenario is inspired from real use-cases such as an eHealth device running on low battery, interactive video gaming, and mobile banking. Each of these applications has specific quality requirements, and the terminals on which these applications are running have different constraints.

The worked example is based on the UEs and cells/base stations shown in Figure 4 and assumes that all cells share the same frequency, hence all re-selections are intra-frequency based. In addition, it assumes that three UEs are currently camped on M1 and have the same $Qmeas$ from all neighbouring cells, such as:

$$Q_{meas,M1} - 0.5 = Q_{meas,M2} = Q_{meas,S3} + 0.5 = Q_{meas,S1} + 0.5$$

$$= Q_{meas,S2} + 1 = Q_{meas,S4} + 1 = Q_{meas,S5} + 1$$

The $Q_{meas}$ is an RSRP measure. It varies depending on the radio conditions and distance of the UE; a realistic example value can be negative 85dBm (-85dBm).

The offset table below presents 4 special offset parameters as signalled in SIB3/SIB4 of the example network. More negative (higher offset) values indicate a better "score" for that characteristic.

| (dB) | | M1 | M2 | S1 | S2 | S3 | S4 | S5 |
|---|---|---|---|---|---|---|---|---|
| $Q_{offset_1}$ | To compensate for macro-small cell power difference | 0 | 0 | -4 | -4 | -4 | -4 | -4 |
| $Q_{offset_2}$ | Throughput capabilities | -2 | -2 | -3 | -3 | 3 | -2 | -4 |
| $Q_{offset_3}$ | Low latency capabilities | -2 | -2 | 0 | 1 | 2 | 2 | 0 |
| $Q_{offset_4}$ | End-to-end security capability | -2 | -2 | -1 | -2 | 0 | -2 | 0 |

In the offset table, Qoffset1 reflects the difference in transmission power between macro cells and small cells. A UE that is running out of battery and needs to transmit a message urgently, needs to recognise which cell would require the minimum UE transmission power while still receiving the signal with acceptable SINR. This is represented by the higher (-4) value of the small cells, indicating, for example, that these cells have a higher transmission power. Alternatively, these cells may have a low noise amplifier (or other receiver boosting technologies) that will amplify received signals from the UEs. Such settings would allow the UE signals to be well received while transmitting with less power, hence minimising power consumption. In effect, these cells require the UE to expend the least amount of power to communicate a message to them.

The second offset reflects the current end-to-end throughput availability of the cell (i.e., including any bottlenecks such as fronthaul or backhaul). The value of this parameter may be changed dynamically according to the traffic conditions, allowing for load balancing.

The third offset reflects the end-to-end round trip latency of a given cell and is affected by the radio conditions (number of retransmissions) of both radio access and wireless backhaul, number of backhaul hops, and the current network conditions. The last offset reflects the end-to-end security level offered by the cell, it may be affected by the network sharing conditions and whether the traffic is routed over third party infrastructure, for example.

The weight table below gives UE specific weights associated with each of the four special offsets.

| | | UE1 | UE2 | UE3 |
|---|---|---|---|---|
| $\omega_1$ | Affected by battery level of UE | 1 | 0.5 | 0.2 |
| $\omega_2$ | Defined by application | 0 | 1 | 0 |
| $\omega_3$ | Defined by application | 0.5 | 1 | 0.2 |
| $\omega_4$ | Defined by application | 0 | 0 | 1 |

In the weight table, the weights computed by each UE reflect the priority level associated by this UE to each of the characteristics framed by the offsets in the offset table. This example, assumes that UE1 (eHealth) is running on very low battery so needs to camp on the closest cell with acceptable latency to enable transmission of message and reception of network response with minimal energy consumption. The second UE, UE2 has half battery level and is likely to play a video interactive game, hence needs high throughput and low latency, but not necessarily private communication. The third UE, UE3 has good battery life and requires a highly secure connection to perform a mobile banking transaction with acceptable latency.

The aggregate UE-centric offset table below shows the weight for each UE already applied to the offset values. A value of $Q_{meas}$ = 10 is taken for ease of calculation.

| (dB) | M1 | M2 | S1 | S2 | S3 | S4 | S5 |
|---|---|---|---|---|---|---|---|
| UE1 | -1 | -1 | -4 | -3.5 | -3 | -3 | -4 |
| UE2 | -4 | -4 | -5 | -4 | 3 | -2 | -6 |
| UE3 | -2.4 | -2.4 | -1.8 | -2.6 | -0.4 | -2.4 | -0.8 |

Here, for example, the offset applied to the M1 signal level by UE1 also taking the weighting into account is -1. Assuming no $Q_{offset_{temp}}$ and no $Q_{offset_{SCPTM}}$, and $Q_{meas,M1}$ = 10.5, then $R_{M1}$ = 11.5 using the equation for $R_n$ set out earlier.

Similarly, and additionally assuming no $Q_{hyst}$, $R_{M2}$ = 11, $R_{S1}$ = 13.5, $R_{S2}$ = 12.5, $R_{S3}$ = 12.5, $R_{S4}$ = 12 and $R_{S5}$ = 13.

The same type of reasoning applied for UE2 and UE3. Consequently, the ranking performed by each UE would be as follows, with different context-aware best cells for each:

$$\text{UE1:} \quad R_{S1} > R_{S5} > (R_{S2}, R_{S3}) > R_{S4} > R_{M1} > R_{M2}$$

$$\text{UE2:} \quad R_{S5} > (R_{M1}, R_{S2}) > R_{M2} > R_{S2} > R_{S4} > R_{S3}$$

$$\text{UE3:} \quad R_{M1} > R_{M2} > R_{S2} > R_{S4} > R_{S1} > R_{S3} > R_{S5}$$

In current 3GPP specifications, all three UEs would rank cells S1 and S4 equally highest, which means that at least two UEs would camp on an under-par cell, with undesirable outcomes:

    1 These UEs will initiate a call and be unsatisfied with the quality delivered,
    2 Accordingly, the network will attempt to hand them over to a better cell,
    3 This results in an increase in latency, UE battery consumption, and network signalling load,
    4 Moreover, network resources are inefficiently used by UEs who would rather be camped on other available cells, i.e., a mismatching of UE needs and network capabilities.

**Some Advantages of Invention Embodiments**

Invention embodiments provide a method to allow the network to control how UEs in RRC-IDLE mode perform cell selection/reselection in a context-aware manner. Moreover, invention embodiments propose a solution that requires minimal configuration signalling and network control to manage load balancing and users' QoS in the network.

The signalling-efficient approach for context-aware cell reselection may:

Identify a potentially comprehensive (or shorter but most appropriate) list of key characteristics that jointly define any service requirements. Examples of such characteristics are: throughput, latency, security, robustness, cost, and energy.

Broadcast a quantitative description of each cell's capabilities with respect to each of these characteristics, for example in a determined range of 9 possible values for 3GPP use.

Allow the UE to compute a context-aware set of weights to prioritise each of these characteristics, for instance bounded by a minimum value of 0 and a maximum of 1.

Allow the UE to rank the cells in the reselection process in a context-aware manner.

Maintain backward compatibility for UEs that choose to not compute such weights.

## Industrial Applicability

The fields of application of this invention include all wireless communications systems in which a UE selects between cells.

## Claims

1. A method in a User Equipment, UE, of cell selection comprising:

   receiving system information from more than one cell, the system information from each cell including offset values, each offset value reflecting the capability of that cell with respect to a different service-based characteristic;
   weighting each received offset value according to the priority of the service-based characteristic for the UE; and
   ranking the cells for selection by the UE taking into account the weighted offsets.

2. A method according to claim 1, wherein:

   the UE sums the weighted offsets for each cell to provide a ranking based on all the service-based characteristics.

3. A method according to claim 1 or 2, wherein:

   the weighted offsets are taken into account by subtraction from a measurement of signal level received from the cell.

4. A method according to any of the preceding claims, wherein:

   ranking the cells includes a ranking Rs for the serving cell that the UE is camped on and a ranking Rn for neighbouring cells, and Rs and Rn are defined in the UE by:

$$R_S = Q_{meas,s} + Q_{hyst} - \sum_{c=1}^{C} \omega_c \times Q_{offset_c} - Q_{offset_{temp}} + Q_{offset_{SCPTM}}$$

$$R_n = Q_{meas,n} - \sum_{c=1}^{C} \omega_c \times Q_{offset_c} - Q_{offset_{temp}} + Q_{offset_{SCPTM}}$$

   where *Qmeas* is the RSRP measurement quantity used in cell reselections, *Qhyst* specifies the hysteresis value for ranking criteria, $\omega_c$ is the weight for service characteristic c applied in the UE, $Q_{offset_c}$ is the offset value for service characteristic c, $Q_{offset_{temp}}$ is any offset temporarily applied to a cell, and $Q_{offset_{SCPTM}}$ is any offset temporarily applied to a Single Cell Point to Multipoint, SC-PTM, frequency.

5. A method according to any of the preceding claims, wherein:

the service-based characteristics include one or more of: transmission power, end-to-end throughput availability, end-to-end latency, security, and geographical cell size.

6. A method according to any of the preceding claims, wherein:

the UE weightings are based on one or more of: anticipated use of the UE, constraints of the UE, and constraints of a user's subscription for the UE services.

7. A method according to any of the preceding claims, wherein:

the UE weightings are stored dynamically in the UE.

8. A method according to any of the preceding claims, wherein:

the UE weightings are between 0 and 1 and the offset values have a range of 9 possible values.

9. A method according to any of the preceding claims, wherein:

the method is used in a cell reselection process, preferably the cell reselection evaluation process in 3GPP LTE and when a cell is ranked as the best cell, the UE performs reselection to that cell.

10. A method according to claim 9, wherein:

the aggregate effect of the weighted offset remains within the range of 3GPP LTE offset effect of -24dB to 22dB.

11. A method of cell reselection in a system with User Equipments, UEs, that do not support multiple offset values for different service-based characteristics, and User Equipments, UEs, that do support multiple offset values for different service-based characteristics wherein:

when one of the UEs is camped on a cell that does not support multiple offset values for different service-based characteristics, or
when one of the UEs does not support multiple offset values for different service-based characteristics,
then the ranking Rs for the serving cell and Rn for neighbouring cells is defined in that UE by

$$R_s = Q_{meas,s} + Q_{hyst} - Q_{offset_{temp}} + Q_{offset_{SCPTM}}$$

$$R_n = Q_{meas,n} - Q_{offset_{temp}} + Q_{offset_{SCPTM}}$$

where *Qmeas* is the RSRP measurement quantity used in cell reselections *Qhyst* specifies the hysteresis value for ranking criteria, $Q_{offset_{temp}}$ is any offset temporarily applied to a cell, and $Q_{ottset_{SCPTM}}$ is any offset temporarily applied to a Single Cell Point to Multipoint, SC-PTM, frequency.

12. A method according to claim 11, wherein:

when a UE is camped on a cell that supports multiple offset values for different service-based characteristics, and the UE supports multiple offset values for different service-based characteristics, then the ranking Rs for the serving cell and Rn for neighbouring cells is defined in that UE by the method according to claim 4.

13. A program which when loaded onto the processor of a User Equipment, UE, configures the UE to carry out the method steps according to any of the preceding method definitions or any combination thereof.

14. A User Equipment, UE, comprising:

a controller to carry out cell selection; and a receiver to receive information from more than one cell, wherein:

the receiver is to receive system information from more than one cell, the system information from each cell including offset values, each offset value reflecting the capability of that cell with respect to a different service-based characteristic; and

the controller is to weight each received offset value according to the priority of the service-based characteristic for the UE and to rank the cells to take into account the weighted offsets.

15. A communications system comprising:

more than one cell to communicate with User Equipments, UEs, wherein one or more of the UEs is a UE according to claim 14.

FIG. 1

```
                        ╭─────────────╮
                        │    Start    │
                        ╰─────────────╯
                               │
                               ▼
        ┌──────────────────────────────────────────────────┐
        │  Receiving system information from more than one cell │
   S10  │ the system information from each cell including offset values, │
        │   each offset value reflecting the capability of that cell │
        │   with respect to a different service-based characteristic │
        └──────────────────────────────────────────────────┘
                               │
                               ▼
        ┌──────────────────────────────────────────────────┐
   S20  │              Weighting each received offset value │
        │ according to the priority of the service-based characteristic for the UE │
        └──────────────────────────────────────────────────┘
                               │
                               ▼
        ┌──────────────────────────────────────────────────┐
   S30  │ Ranking the cells to take into account the weighted offsets. │
        └──────────────────────────────────────────────────┘
                               │
                               ▼
                        ╭─────────────╮
                        │     End     │
                        ╰─────────────╯
```

FIG. 2

FIG. 3

FIG. 4

Cell Reselection
Evaluation Process

S100 — Camped on a cell that does
not support multiple offsets

①

S110 — Calculate $R_s$ and $R_n$ of all
available $Q_{meas,n}$ based on
current procedure

S120 — max($R_n$)>$R_s$

S130 — yes

Change suitable cell
to max(Rn)

no — S140

No cell change

Camped on a cell that
supports multiple offsets — S150

S160 — UE supports
multiple offsets

③ no

S170 — Go to ①

yes ②

Calculate $R_s$ and $R_n$ of all
available $Q_{meas,n}$ based on
novel procedure — S180

S190 — max($R_n$)>$R_s$

S200 — yes

Change suitable cell
to max(Rn)

no — S210

No cell change

FIG. 5

Europäisches
Patentamt

European
Patent Office

Office européen
des brevets

# EUROPEAN SEARCH REPORT

Application Number

EP 18 20 1605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMSUNG: "Service Specific Cell (Re-) Selection in NR", 3GPP DRAFT; R2-166067_SERVICE SPECIFIC CELL (RE-) SELECTION IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Kaohsiung, Taiwan; 20161010 - 20161014 9 October 2016 (2016-10-09), XP051150689, Retrieved from the Internet: URL:http://www.3gpp.org/ftp/Meetings_3GPP_ SYNC/RAN2/Docs/ [retrieved on 2016-10-09] * page 2, paragraph 2.2 * ----- | 1,11 | INV. H04W48/12 ADD. H04W48/16 H04W48/20 |
| A | QUALCOMM INCORPORATED: "UE context awareness to optimize the RAN performance", 3GPP DRAFT; R2-165582_UE CONTEXT AWARENESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 13 August 2016 (2016-08-13), XP051134244, Retrieved from the Internet: URL:http://www.3gpp.org/ftp/tsg_ran/WG2_RL 2/TSGR2_95/Docs/ [retrieved on 2016-08-13] * page 1 * * page 2; table 1 * ----- -/-- | 1-15 | TECHNICAL FIELDS SEARCHED (IPC) H04W |

The present search report has been drawn up for all claims

| Place of search | Date of completion of the search | Examiner |
|---|---|---|
| Munich | 22 February 2019 | Stefanis, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUAWEI: "Discussion on the use cases and requirements for Context Aware Service Delivery", 3GPP DRAFT; R3-160630 DISCSSION ON THE USE CASES AND REQUIREMENTS FOR CONTEXT AWARENESS SERVICE DELIVERY, 3RD GENERATION PARTNERSHIP PROJECT (3GPP), MOBILE COMPETENCE CENTRE ; 650, ROUTE DES LUCIOLES , vol. RAN WG3, no. Bangalore, India; 20160411 - 20160415 1 April 2016 (2016-04-01), XP051082834, Retrieved from the Internet: URL:http://www.3gpp.org/ftp/tsg_ran/WG3_Iu /TSGR3_91bis/Docs/ [retrieved on 2016-04-01] * page 2 - page 2 * ----- | 1-15 | |
| A | LG ELECTRONICS INC: "Context Aware Networking", 3GPP DRAFT; S1-153050 CONTEXT AWARED NETWORKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Vancouver, Canada; 20151019 - 20151021 9 October 2015 (2015-10-09), XP051042928, Retrieved from the Internet: URL:http://www.3gpp.org/ftp/tsg_sa/WG1_Ser v/TSGS1_71bis_adhoc_5G_Vancouver/docs/ [retrieved on 2015-10-09] * the whole document * ----- -/-- | 1-15 | TECHNICAL FIELDS SEARCHED (IPC) |

The present search report has been drawn up for all claims

| Place of search | Date of completion of the search | Examiner |
|---|---|---|
| Munich | 22 February 2019 | Stefanis, Dimitrios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                
& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 18 20 1605

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/066858 A1 (LG ELECTRONICS INC [KR]) 12 April 2018 (2018-04-12)<br>* paragraph [0007] *<br>* paragraph [0078] *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 22 February 2019 | Stefanis, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 641 405 A1

## ANNEX TO THE EUROPEAN SEARCH REPORT
## ON EUROPEAN PATENT APPLICATION NO.

EP 18 20 1605

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2019

| Patent document cited in search report | Publication date | Patent family member(s) | Publication date |
|---|---|---|---|
| WO 2018066858 A1 | 12-04-2018 | NONE | |

EPO FORM P0459

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- User Equipment (UE) procedures in idle mode. *3GPP TS 36.304*
- Radio Resource Control (RRC); Protocol specification. *3GPP TS 36:331*
- NAS functions related to Mobile Station (MS) in idle mode. *3GPP TS 23.122*
- User Equipment (UE) radio transmission and reception. *3GPP TS 36.101*
- Requirements for Support of Radio Resource Management. *3GPP TS 36.133*